# EUROPEAN PATENT SPECIFICATION

(11) **EP 3 720 193 B1**
(45) Date of publication and mention of the grant of the patent: **18.08.2021**
(21) Application number: 19166495.2
(22) Date of filing: 01.04.2019
(51) Int. Cl.: H04W 48/18, H04W 88/18, H04W 36/00

(54) **MOBILE COMMUNICATION NETWORK COMPONENT AND METHOD FOR REQUESTING A SERVICE**
MOBILKOMMUNIKATIONSNETZWERKKOMPONENTE UND VERFAHREN ZUM ANFORDERN EINES DIENSTES
COMPOSANT DE RÉSEAU DE COMMUNICATION MOBILE ET PROCÉDÉ PERMETTANT DE DEMANDER UN SERVICE

(43) Date of publication of application: 07.10.2020
(73) Proprietor: NTT DoCoMo, Inc., Tokyo 100-6150 (JP)
(72) Inventor: MUTIKAINEN, Jari, 80687 Munich (DE); GUERZONI, Riccardo, 80687 Munich (DE)
(74) Representative: Viering, Jentschura & Partner mbB Patent- und Rechtsanwälte

(56) References cited:
- US-A1- 2019 098 618
- "3rd Generation Partnership Project; Technical Specification Group Services and System Aspects; System Architecture for the 5G System; Stage 2 (Release 16)", 3GPP DRAFT; 23501-G00_FROM_F50_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2 28 March 2019 (2019-03-28), XP051751804, Retrieved from the Internet: URL:http://www.3gpp.org/ftp/tsg%5Fsa/WG2%5 FArch/Latest%5FSA2%5FSpecs/DRAFT%5FINTERIM /Archive/23501%2Dg00%5Ffrom%5Ff50%5FCRs%5F Implemented%2Ezip [retrieved on 2019-03-28]
- SA2: "[DRAFT] LS on handling of Indirect communication across NF/NF Services", 3GPP DRAFT; S2-1902782, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Santa Cruz - Tenerife, ES; 20190225 - 20190301 28 February 2019 (2019-02-28), XP051611170, Retrieved from the Internet: URL:http://www.3gpp.org/ftp/tsg%5Fsa/WG2%5 FArch/TSGS2%5F131%5FTenerife/Docs/S2%2D190 2782%2Ezip [retrieved on 2019-02-28]

## Description

### FIELD OF THE INVENTION

The present disclosure relates to a mobile communication network component and a corresponding method for requesting a service.

### BACKGROUND ART

In a mobile communication network, a component acting as service producer (i.e. a network function providing a service for another component) may include a plurality of service sets which may each include service producer instances that implement the same service but may differ from the service instances of another service set in implementation such that they do not have the same compatibility characteristics. For a service consumer (i.e. the other component requesting a service) it may thus be of relevance which service set provides the service consumer with the requested service. Background art is represented by the 3GPP technical specification TS 23.501 V16.0.0 (2019-03).

Accordingly, approaches for determining a service set for providing a service to, for example, fulfil compatibility requirements, are desirable.

### SUMMARY OF THE INVENTION

The invention is defined by a mobile communication network component according to claim 1 and a corresponding method for requesting a service by the mobile communication network component according to claim 14. Preferred embodiments are defined in the dependent claims.

### DESCRIPTION OF THE DRAWINGS

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile communication system.
- Figure 2: shows a communication arrangement illustrating a handover or registration for mobility of a mobile terminal from a first PLMN (Public Land Mobile Network) to a second PLMN for providing the mobile terminal with inter-PLMN mobility.
- Figure 3: illustrates the concept of NF Service Sets for an AMF instance.
- Figure 4: shows an arrangement with a first NF instance acting as serving consumer requesting a service from a second NF instance acting as service producer.
- Figure 5: illustrates a flow diagram for requesting a service by direct communication according to an embodiment.
- Figure 6: illustrates a flow diagram for requesting a service by indirect communication according to an embodiment.
- Figure 7: shows a flow diagram illustrating a handover procedure according to an embodiment based on the direct communication approach of figure 5.
- Figure 8: shows a flow diagram illustrating a handover procedure according to an embodiment based on the indirect communication approach of figure 6.
- Figure 9: shows a flow diagram illustrating an AMF re-allocation procedure according to an embodiment based on the direct communication approach of figure 5.
- Figure 10: shows a flow diagram illustrating a AMF re-allocation procedure according to an embodiment based on the indirect communication approach of figure 6.
- Figure 11: shows a first AMF and a second AMF.
- Figure 12: shows a flow diagram illustrating a Service Set selection in a registration for mobility scenario according to an embodiment.
- Figure 13: shows a flow diagram illustrating a Service Set selection in a registration for mobility scenario according to an embodiment.
- Figure 14: shows a mobile communication network component.
- Figure 15: shows a flow diagram illustrating a method for requesting a service.

### DETAILED DESCRIPTION

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below, wherein all described examples one to twenty-eight form part of the claimed invention, which is defined in the appended claims, and are within the scope of the claimed invention:
A mobile communication network component comprises: a determiner configured to determine, for a first network function service set of a first network function, a second network function service set of a second network function to provide a service to a first network function service instance within the first network function service set, wherein the determiner is configured to determine the second network function service set based on a mapping of the first network function service set to the second network function service set; and a transmitter configured to transmit a service request to the determined second network function service set. The mobile communication network component mentioned in this paragraph provides a first claimed example according to independent claim 1.

The determiner may optionally be configured to determine the second network function service set based on a compatibility with the first network function service set. The features mentioned in this paragraph in combination with the first example provide a second claimed example.

The determiner may optionally be configured to determine the second network function service set by consulting a database storing a mapping of the first network function service set to the second network function service set. The features mentioned in this paragraph in combination with the first example or with the second example provide a third claimed example.

The database may optionally be a network repository function. The features mentioned in this paragraph in combination with the third example provide a fourth claimed example.

The mobile communication network component may optionally be the first network function. The features mentioned in this paragraph in combination with any one of the examples one to four provide a fifth claimed example.

The mobile communication network component may optionally include a receiver configured to receive the service request from the first network function to be routed to the second network function. The features mentioned in this paragraph in combination with any one of the examples one to four provide a sixth claimed example.

The mobile communication network component may optionally be a signalling communication proxy. The features mentioned in this paragraph in combination with the sixth example provide a seventh claimed example.

Transmitting a service request to the determined second network function service set may optionally include selecting a second network function service instance from the determined second network function service set and transmitting the service request to the second network function service instance. The features mentioned in this paragraph in combination with any one of the examples one to seven provide an eighth claimed example.

The first network function may optionally include a first plurality of network function service sets and the second network function may optionally include a second plurality of network function service sets. The features mentioned in this paragraph in combination with any one of the examples one to eight provide a ninth claimed example.

The determiner may optionally be configured to determine the second network function service set by selecting a network function service set from the second plurality of network function service sets. The features mentioned in this paragraph in combination with the ninth example provide a tenth claimed example.

The first network function may optionally be a source Access and Mobility Management Function and the second network function may optionally be a target Access and Mobility Management Function in a handover or a registration for mobility of a mobile terminal. The features mentioned in this paragraph in combination with any one of the examples one to ten provide an eleventh claimed example.

The service may optionally be taking over serving the mobile terminal after the handover or a registration for mobility. The features mentioned in this paragraph in combination with the eleventh example provide a twelfth example.

The first network function may optionally be a target Access and Mobility Management Function and the second network function may optionally be a source Access and Mobility Management Function in a registration for mobility of a mobile terminal. The features mentioned in this paragraph in combination with any one of the examples one to ten provide a thirteenth claimed example.

The service may optionally be a transfer of a context of a mobile terminal. The features mentioned in this paragraph in combination with the thirteenth example provide a fourteenth claimed example.

A method performed by a mobile communication network component, for requesting a service, comprises: determining, for a first network function service set of a first network function, a second network function service set of a second network function to provide the service to a first network function service instance within the first network function service set, wherein the second network function service set is determined based on a mapping of the first network function service set to the second network function service set; and transmitting a service request to the determined second network function service set. The method for requesting a service mentioned in this paragraph provides a fifteenth claimed example according to independent claim 14.

The method may optionally include determining the second network function service set based on a compatibility with the first network function service set. The features mentioned in this paragraph in combination with the fifteenth example provide a sixteenth example.

The method may optionally include determining the second network function service set by consulting a database storing a mapping of the first network function service set to the second network function service set. The features mentioned in this paragraph in combination with the fifteenth example or with the sixteenth example provide a seventeenth example.

The database may optionally be a network repository function. The features mentioned in this paragraph in combination with the seventeenth example provide an eighteenth example.

The method may optionally be performed by the first network function. The features mentioned in this paragraph in combination with any one of the examples fifteen to eighteen provide a nineteenth example.

The method may optionally include receiving the service request from the first network function to be routed to the second network function. The features mentioned in this paragraph in combination with any one of the examples fifteen to nineteen provide a twentieth example.

The method may be performed by a signalling communication proxy. The features mentioned in this paragraph in combination with the twentieth example provide a twenty-first example.

Transmitting a service request to the determined second network function service set may optionally include selecting a second network function service instance from the determined second network function service set and transmitting the service request to the second network function service instance. The features mentioned in this paragraph in combination with any one of the examples fifteen to twenty-one provide a twenty-second example.

The first network function may optionally include a first plurality of network function service sets and the second network function may optionally include a second plurality of network function service sets. The features mentioned in this paragraph in combination with any one of the examples fifteen to twenty-two provide a twenty-third example.

The method may optionally include determining the second network function service set by selecting a network function service set from the second plurality of network function service sets. The features mentioned in this paragraph in combination with the twenty-third example provide a twenty-fourth example.

The first network function may optionally be a source Access and Mobility Management Function and the second network function may optionally be a target Access and Mobility Management Function in a handover or a registration for mobility of a mobile terminal. The features mentioned in this paragraph in combination with any one of the examples fifteen to twenty-four provide a twenty-fifth example.

The service may optionally be taking over serving the mobile terminal after the handover or a registration for mobility. The features mentioned in this paragraph in combination with the twenty-fifth example provide a twenty-sixth example.

The first network function may optionally be a target Access and Mobility Management Function and the second network function may optionally be a source Access and Mobility Management Function in a registration for mobility of a mobile terminal. The features mentioned in this paragraph in combination with any one of the examples fifteen to twenty-three provide a twenty-seventh example.

The service may optionally be a transfer of a context of a mobile terminal. The features mentioned in this paragraph in combination with the twenty-sixth example provide a twenty-eighth example.

In the following, various examples will be described in more detail.

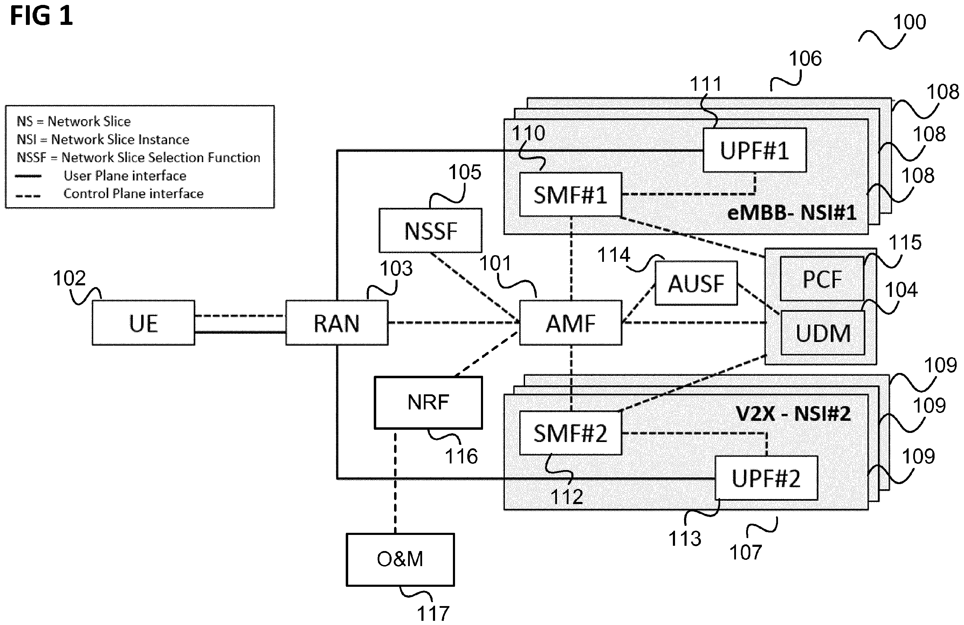

Figure 1 shows a mobile communication system 100.

The mobile communication system 100 includes a mobile radio terminal device 102 such as a UE (user equipment), a nano equipment (NE), and the like. The mobile radio terminal device 102, also referred to as subscriber terminal, forms the terminal side while the other components of the mobile communication system 100 described in the following are part of the mobile communication network side, i.e. part of a mobile communication network (e.g. a Public Land Mobile Network - PLMN).

Furthermore, the mobile communication system 100 includes a radio access network 103, which may include a plurality of radio access network nodes, i.e. base stations configured to provide radio access in accordance with a 5G (Fifth Generation) radio access technology (5G New Radio). It should be noted that the mobile communication system 100 may also be configured in accordance with LTE (Long Term Evolution) or Wi-Fi (radio wireless local area networking) or another mobile communication standard but 5G is herein used as an example. Each radio access network node may provide a radio communication with the mobile radio terminal device 102 over an air interface. It should be noted that the radio access network 103 may include any number of radio access network nodes.

The mobile communication system 100 further includes a core network including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network further includes an AUSF (Authentication Server Function) 114 and a PCF (Policy Control Function) 115.

The core network of the mobile communication system 100 further includes a NRF (Network Repository Function) 116 to which (at least) the AMF 101 is connected.

The mobile communication system 100 may further comprise an O&M (Operations and Maintenance) system 117 connected to (at least) the NRF 116. The O&M system 117 may for example correspond to an OSS/BSS System (Operations Support System/ Business Support System) comprising for example a Service Management Function (SerMF) and a Network Slice Management Function (NSMF).

The core network may have multiple (core) network slices 106, 107 and for each network slice 106, 107, the operator may create multiple network slice instances (NSIs) 108, 109. In this example, the core network includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in this example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

When a mobile terminal being served by a access and mobility function and leaving the service area of the access and mobility function, a handover or registration of mobility (reselection) of the mobile terminal to another access and mobility function may be performed.

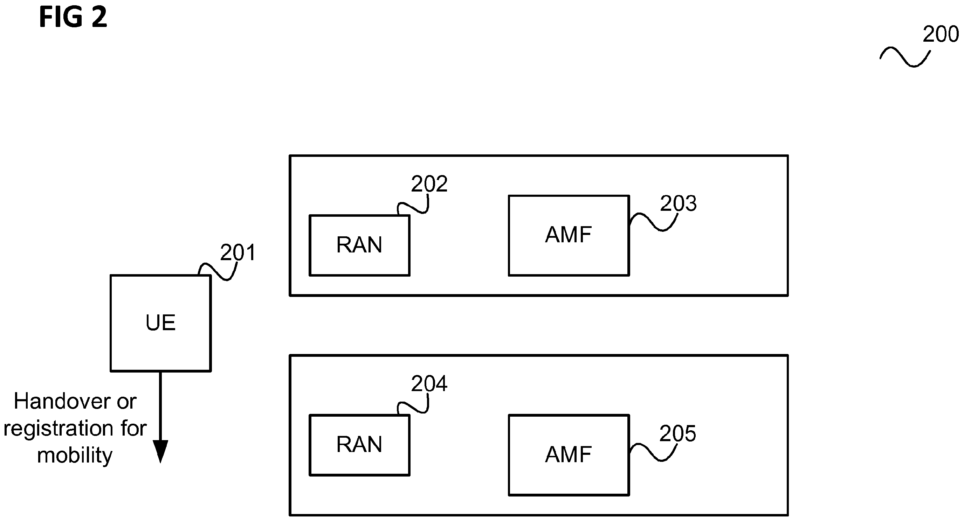

Figure 2 shows a communication arrangement 200 illustrating a handover or registration for mobility of a mobile terminal 201 from a first access and mobility function 203 to a second access and mobility function 205 for providing the mobile terminal (e.g. UE) 201 with mobility support.

The first AMF 203 provides core network connectivity to a first RAN 202 and the second AMF 203 provides core network connectivity to a second RAN 204 as described with reference to figure 1.

In case of a handover, the mobile terminal 201 has a communication session via the first RAN 202. This means that the mobile terminal 201 has a communication session via the first RAN 202 controlled by the first AMF 203. After the handover, the mobile terminal 201 continues the communication session via the second RAN 204. This means that after the handover, the mobile terminal 201 has a communication session via the second RAN 204 controlled by the second AMF 205 continuing the previous communication session via the first RAN 202.

In case of a registration for mobility, the UE 201 is in idle mode and, before the registration for mobility, is camping on the first RAN 202 controlled by the first AMF 203 and after the registration for mobility the UE 201 is camping on the second RAN 204 controlled by the second AMF 205.

The 5GC according to 3GPP (Third Generation Partnership Project) Release 16 introduces the NF (Network Function) Service Set, defined as "set of interchangeable NF Service instances". Within an NF instance (or similarly also within an NF set), there can be multiple NF Service Sets of the same NF service type, each identified by a NF Service Set ID.

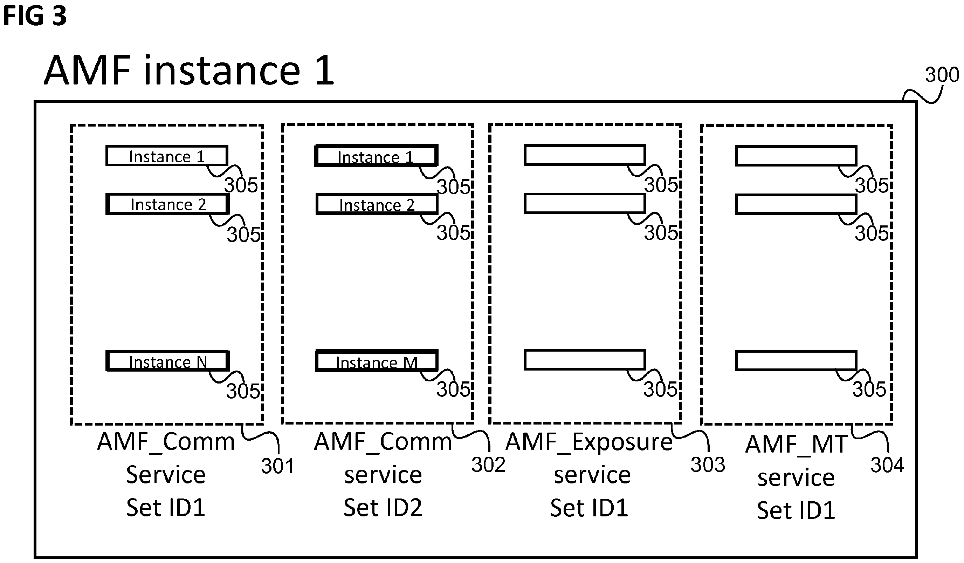

Figure 3 illustrates the concept of NF Service Sets for an AMF instance 300.

The AMF instance 300 is for example part of an AMF set corresponding for example to the AMF 101 of figure 1.

The AMF instance 300 includes four NF Service Sets 301 to 304, a first AMF_Comm Service Set 301, a second AMF_Comm Service Set 302, an AMF_Exposure Service Set 303 and an AMF_MT Service Set 304.

Each NF Service Set 301 to 304 includes a plurality of interchangeable NF Service Instances 305.

The term "interchangeable" may refer to the fact that the NF Service instances 305 within an NF Service Set implement the same flavour of a NF Service type, e.g. the NF Service instances 305 with the NF Service Set have the same compatibility characteristics. For example, the first AMF_Comm Service Set 301 may include AMF_communication service instances 305 with the same proprietary implementation.

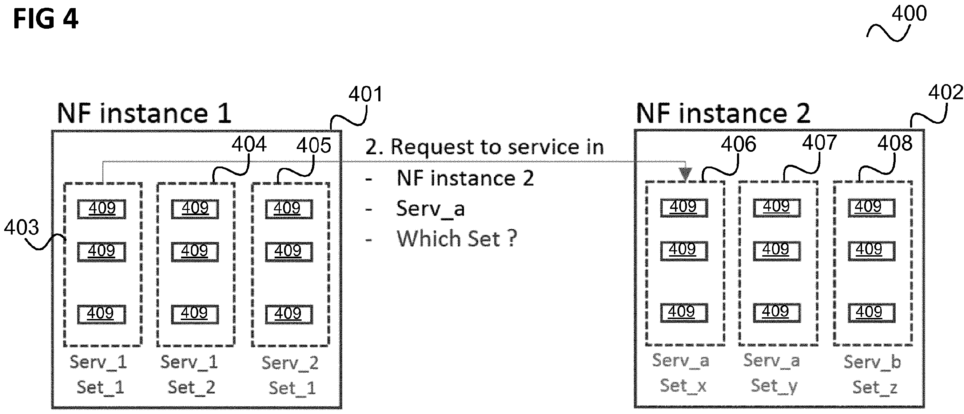

According to various embodiments, a service consumer sends a Service Request by selecting the correct NF Service Set (flavour) for a target NF Service producer instance. This is illustrated in figure 4.

Figure 4 shows an arrangement 400 with a first NF instance 401 acting as serving consumer requesting a service from a second NF instance 402 acting as service producer.

Similarly to the AMF instance 300, the NF instances 401, 402 each comprise Service Sets 403 to 408, each Service Set comprising a plurality of Service Set instances 409.

It is now assumed that an instance of the Service Set Serv_1 set_1 403 of the first NF instance 401 needs to request a service Serv_a from the second NF instance 402. However, there are two NF service sets for Serv_a, namely Serv_a Set_x 406 and Serv_a Set_y 407. It may occur that Serv_a Set_x 406 is compatible with Serv_1 Set_1 403, while Serv_a Set_y 407 is not compatible with Serv_1 Set_1 403. Therefore, an approach is needed to determine which NF service set 406, 407 implements the correct NF service flavour in the target NF instance 402, i.e. to determine a (suitable) target NF service set.

According to various embodiments, an approach is provided including
1) performing a mapping between an NF Service Set ID of a service consumer and an NF Service Set ID of a service producer by a discovery step,
2) performing a routing of a Service Request considering the mapped NF Service Set ID as selection parameter.

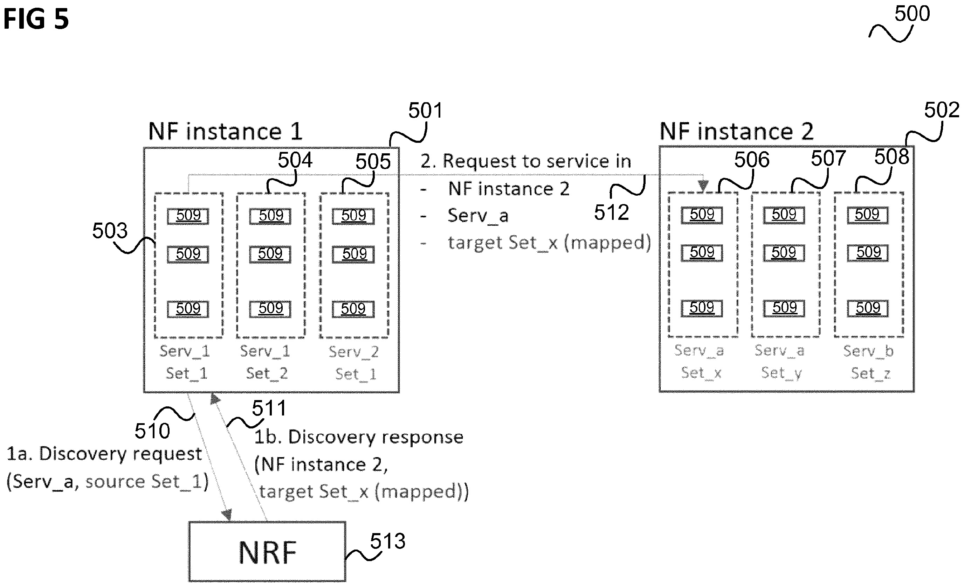

Figure 5 illustrates a flow diagram 500 for requesting a service by direct communication according to an embodiment.

Similarly to figure 4, two NF instances 501, 502 are involved in the flow, wherein each NF instance 501, 502 comprises Service Sets 503 to 508, each Service Set comprising a plurality of Service Set instances 509.

Further, an NRF 513 is involved in the flow, which is an NRF of the communication network to which (at least) the first NF instance 501 belongs and e.g. corresponds to the NRF 116.

Like in the example of figure 4, an instance of the Service Set Serv_1 set_1 503 of the first NF instance 501 needs to request a service Serv_a from the second NF instance 502. There are two NF service sets for Serv_a, namely Serv_a Set_x 506 and Serv_a Set_y 507 and it is assumed that Serv_a Set_x 506 is compatible with Serv_1 Set_1 503, while Serv_a Set_y 507 is not compatible with Serv_1 Set_1 503.

For being provided with the suitable Service Set, namely Serv_a Set_x 506, the first NF instance (service consumer), in 511, performs discovery with the NRF 513 to get a mapped NF Service ID. This includes sending a discovery request 510 message specifying the desired service Serv_a and the source NF Service Set Serv_1 Set_1 503.

The NRF 513 responds in 511 with a discovery response message with specifies the target NF instance 502 and the target NF Service Set Serv_a Set_x 506, i.e. the NF Service Set to which Serv_1 Set_1 503 is mapped. It should be noted that the discovery response message may include a list of target NF instances and target NF Service Sets from which the first NF instance 501 may choose.

The NRF 513 may store the mapping of, e.g. compatible, NF Service Sets to be able to respond to discovery requests as sent in 510. The mapping may be predetermined by the NRF 513 or by another component and stored in the NRF 513.

In 512, the first NF instance 501 routes the Service Request to the second NF instance 502 (possibly chosen from a list provided by the NRF 513). The Service Request includes a specification of the mapped NF Service Set ID Serv_a Set_x 506 for the second NF instance 502.

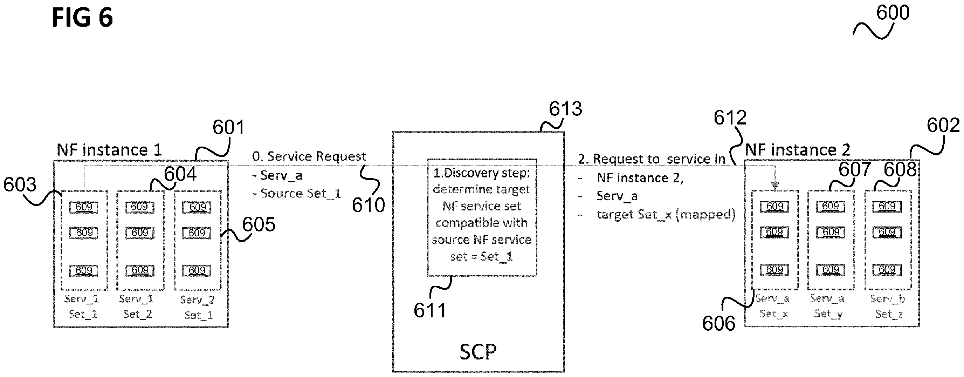

Figure 6 illustrates a flow diagram 600 for requesting a service by indirect communication according to an embodiment.

Similarly to figure 5, two NF instances 601, 602 are involved in the flow, wherein each NF instance 601, 602 comprises Service Sets 603 to 608, each Service Set comprising a plurality of Service Set instances 609.

Further, an SCP 613 (Signalling Communication Proxy) is involved in the flow, which is an SCP of the communication network to which (at least) the first NF instance 601 belongs.

Like in the example of figure 5, an instance of the Service Set Serv_1 set_1 603 of the first NF instance 601 needs to request a service Serv_a from the second NF instance 602. There are two NF service sets for Serv_a, namely Serv_a Set_x 606 and Serv_a Set_y 607 and it is assumed that Serv_a Set_x 606 is compatible with Serv_1 Set_1 603, while Serv_a Set_y 607 is not compatible with Serv_1 Set_1 603.

In this example, the first NF instance 601 does not itself perform discovery of a suitable NF Service Set. Rather, in 610, it sends a service request specifying the requested service Serv_a and the source (i.e. requesting) NF Service Set Set_1 to the SCP 613.

In 611, the SCP 613 performs the discovery. This means that the SCP 613 maps the NF Service Set ID of the service consumer, i.e. Serv_1 Set_1, to a NF service set of the second NF instance 602 to determine a target NF service set compatible with the source NF service set. In this example, Serv_1 Set_1 is mapped to Serv_a Set_x.

In 612, the SCP 613 routes the Service Request to the second NF instance 602. The routed Service Request includes a specification of the mapped NF Service Set ID Serv_a Set_x 606 for the second NF instance 602.

In the following, an example of an application of the approaches of figures 5 and 6 to a (N2 based) handover is described, where the first NF instance 501, 601 for example corresponds to the first AMF 203 of figure 2 and the second NF instance 502, 602 for example corresponds to the second AMF 205 of figure 2. Accordingly, in the following examples, NF refers to AMF.

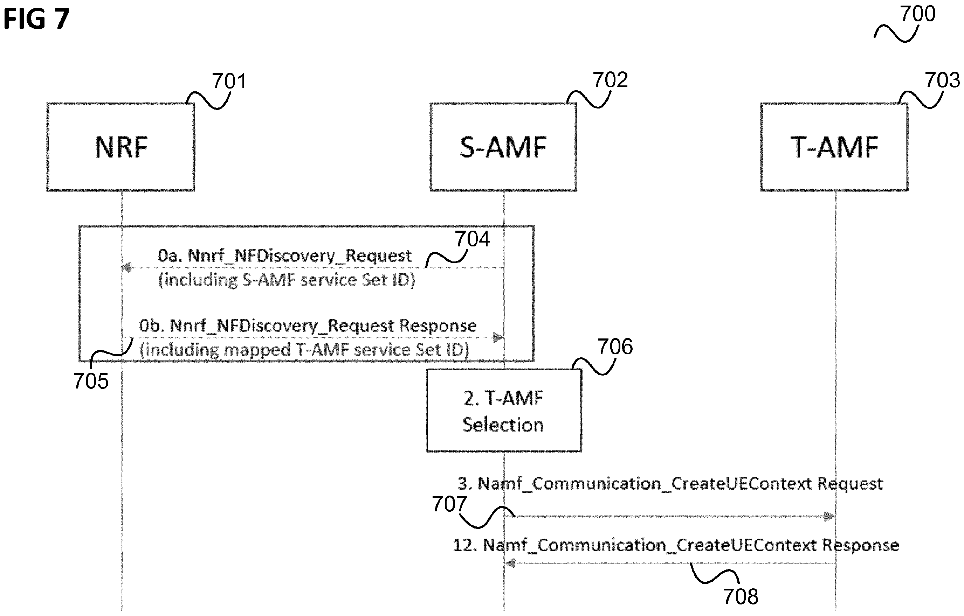

Figure 7 shows a flow diagram 700 illustrating a handover procedure according to an embodiment based on the direct communication approach of figure 5.

An NRF 701, a source AMF (specifically a source AMF instance) 702 and a target AMF (specifically a target AMF instance) 703 are involved in the flow.

The source AMF (S-AMF) 702 for example corresponds to the first AMF 203 of figure 2 and the target AMF (T-AMF) 703 for example corresponds to the second AMF 205 of figure 2.

The source AMF 702 utilizes the NRF 701 to discover the target AMF instance 703 unless AMF information is available by other means, e.g. locally configured in the source AMF 702. Further, the source AMF 702, in this example of direct communication , utilizes the NRF 701 to discover the target NF Service Set suitable for its source NF Service Set which requests the service.

For this, in 704, the source AMF 702 provides to the NRF:
- NF service Name(s), e.g. of the Service to be requested
- NF type of the target NF (target AMF 703),
- NF type of the NF service consumer (source AMF 702)
- T-AMF region, AMF Set ID (e.g. of T-AMF 703), GUAMI (Globally Unique AMF ID) of T-AMF 703
- S-AMF service Set ID of the S-AMF Service Set requesting the service, i.e. an identification of the Service Set of the S-AMF 702 to be mapped.

In response, in 705, the NRF 701 provides
- a set of NF instances (i.e. possible target AMF instances), containing per NF Instance:
   - NF type,
   - NF instance ID,
   - FQDN (Fully Qualified Domain Name) or IP address(es) of the NF instance
   - and a list of services instances, where each service instance has:
      - a service name,
      - an NF service instance ID,
      - optionally Endpoint Address(es)
      - NF (i.e. target AMF) Service Set ID, i.e. an NF service Set ID for the respective NF service Set (within the respective target AMF 703) to which the Service Set of the S-AMF 702 is mapped.

In 706, the source AMF 702 selects a target AMF from the list of target AMFs provided by the NRF 701.

In 707, the source AMF 702 requests the service from the selected target AMF 703 by means of a Namf_Communication_CreateUEContext Request message including the target NF Service Set ID.

In 708, the target AMF 703 acknowledges the request by means of a Namf_Communication_CreateUEContext Response message.

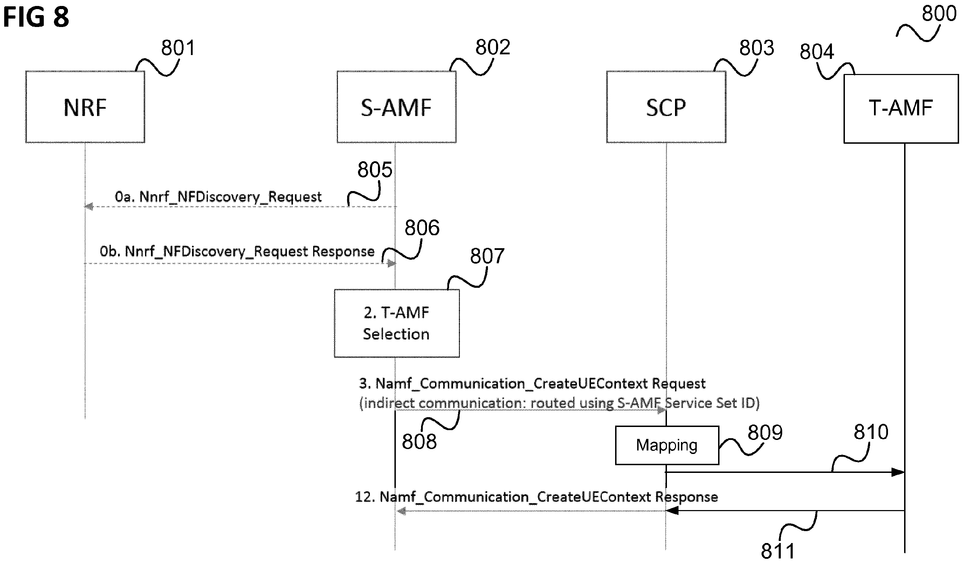

Figure 8 shows a flow diagram 800 illustrating a handover procedure according to an embodiment based on the indirect communication approach of figure 6.

An NRF 801, a source AMF (instance) 802, an SCP 803 and a target AMF (instance) 804 are involved in the flow.

The source AMF (S-AMF) 802 for example corresponds to the first AMF 203 of figure 2 and the target AMF (T-AMF) 803 for example corresponds to the second AMF 205 of figure 2.

Optionally, the source AMF 802 utilizes the NRF 801 to discover the target AMF instance 803 unless AMF information is available by other means, e.g. locally configured in the source AMF 802.

For this, in 805, the source AMF 802 provides to the NRF:
- NF service Name(s), e.g. of the Service to be requested
- NF type of the target NF (target AMF 803),
- NF type of the NF service consumer (source AMF 802)
- T-AMF region, AMF Set ID (e.g. of T-AMF 803), GUAMI (Globally Unique AMF ID) of T-AMF 803.

In response, in 806, the NRF 801 provides
- a set of NF instances (i.e. possible target AMF instances), containing per NF Instance:
   - NF type,
   - NF instance ID,
   - FQDN (Fully Qualified Domain Name) or IP address(es) of the NF instance
   - and a list of services instances, where each service instance has:
      - a service name,
      - an NF service instance ID,
      - optionally Endpoint Address(es).

In 807, the source AMF 802 selects a target AMF from the list of target AMFs provided by the NRF 801.

In 808, the source AMF 802 sends a service request for the selected target AMF 804 by means of a Namf_Communication_CreateUEContext Request message which it sends to the SCP 803. The message includes discovery and selection parameters and in particular the source NF Service Set ID.

In 809, the SCP 803 performs the mapping of the source NF Service Set ID to the target NF Service Set ID of the T-AMF 804.

In 810, the SCP 803 routes the service request to the T-AMF 804 wherein it includes the target NF Service Set ID to which it has mapped the source NF Service Set ID.

In 811, the target AMF 803 acknowledges the request by means of a Namf_Communication_CreateUEContext Response message.

In the following, an example of an application of the approaches of figures 5 and 6 to a registration with AMF re-allocation is described, where the first NF instance 501, 601 for example corresponds to a first AMF and the second NF instance 502, 602 for example corresponds to a second AMF of the same PLMN.

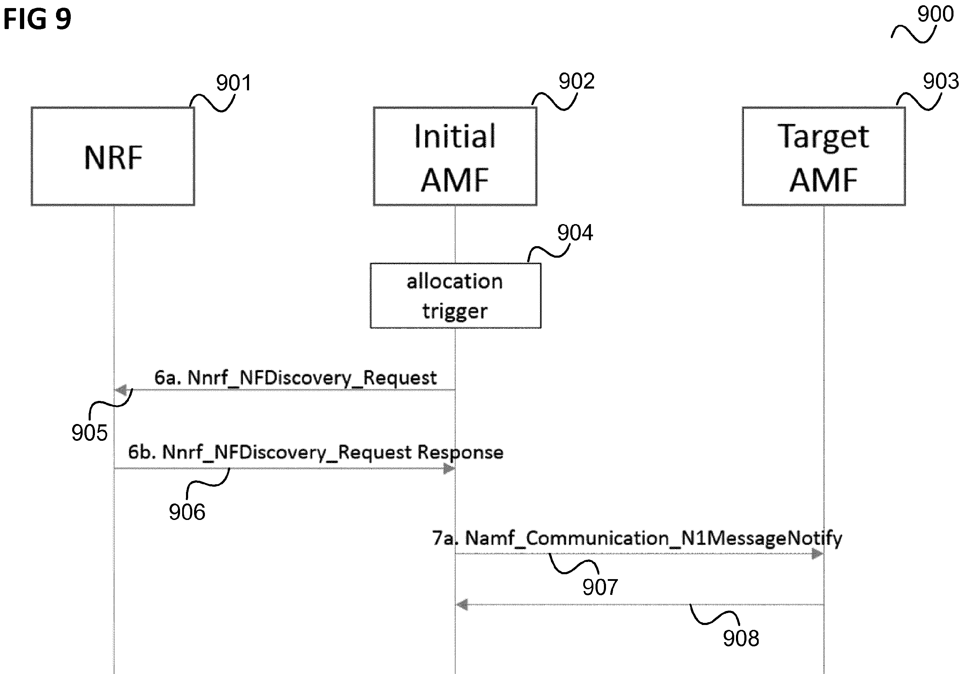

Figure 9 shows a flow diagram 900 illustrating an AMF re-allocation procedure according to an embodiment based on the direct communication approach of figure 5.

An NRF 901, a source (or initial) AMF (instance) 902 and a target AMF (instance) 903 are involved in the flow.

For example, a mobile terminal has performed registration with the communication network to which the AMFs 902, 903 belong and the initial AMF 902 has been initially selected for serving the mobile terminal (e.g. because it is the default AMF) but the mobile terminal should now be re-allocated to the target AMF 903.

In 904, the re-allocation is triggered.

The source AMF 902 utilizes the NRF 901 to discover the target AMF instance 903 unless AMF information is available by other means, e.g. locally configured in the source AMF 902. Further, the source AMF 902, in this example of direct communication, utilizes the NRF 901 to discover the target NF Service Set suitable for its source NF Service Set which requests the service.

For this, in 905, the source AMF 902 provides to the NRF:
- NF service Name(s), e.g. of the Service to be requested
- NF type of the target NF (target AMF 903),
- NF type of the NF service consumer (source AMF 902)
- T-AMF region, AMF Set ID (e.g. of T-AMF 903), GUAMI (Globally Unique AMF ID) of T-AMF 903
- S-AMF service Set ID of the S-AMF Service Set requesting the service, i.e. an identification of the Service Set of the S-AMF 902 to be mapped.

In response, in 906, the NRF 901 provides
- a set of NF instances (i.e. possible target AMF instances), containing per NF Instance:
   - NF type,
   - NF instance ID,
   - FQDN (Fully Qualified Domain Name) or IP address(es) of the NF instance
   - and a list of services instances, where each service instance has:
      - a service name,
      - an NF service instance ID,
      - optionally Endpoint Address(es)
      - NF (i.e. target AMF) Service Set ID, i.e. an NF service Set ID for the respective NF service Set (within the respective target AMF 903) to which the Service Set of the S-AMF 902 is mapped.

In 907, the source AMF 902 requests the service from the target AMF 903 by means of a Namf_Communication_N1MessageNotify message including the target NF Service Set ID.

The target AMF 903 acknowledges the request in 908.

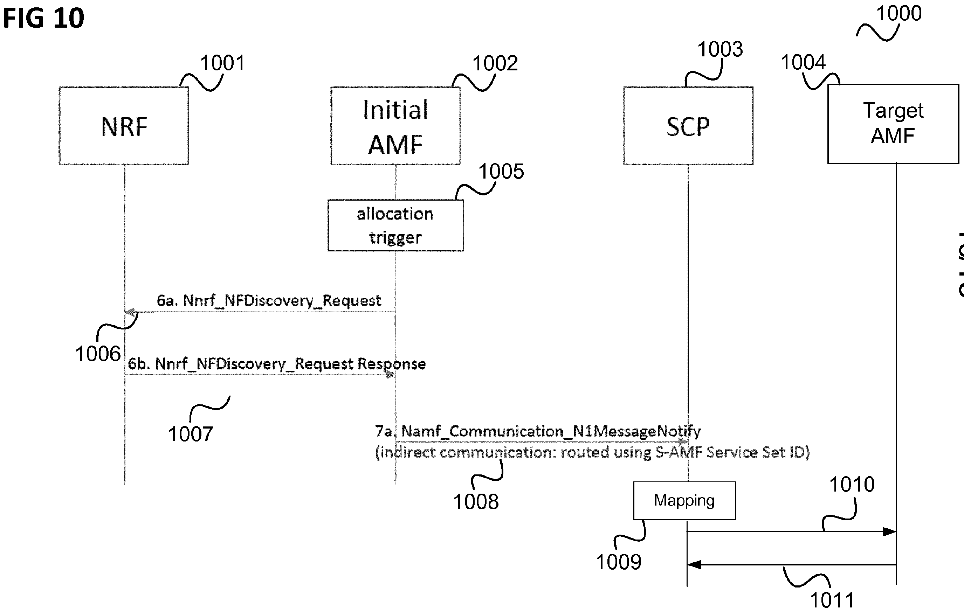

Figure 10 shows a flow diagram 1000 illustrating an AMF re-allocation procedure according to an embodiment based on the indirect communication approach of figure 6.

An NRF 1001, a source (or initial) AMF (instance) 1002, an SCP 1003 and a target AMF (instance) 1004 are involved in the flow.

The source AMF 1002 utilizes the NRF 1001 to discover the target AMF instance 1004 unless AMF information is available by other means, e.g. locally configured in the source AMF 1002.

For example, a mobile terminal has performed registration with the communication network to which the AMFs 1002, 1004 belong and the initial AMF 1002 has been initially selected for serving the mobile terminal (e.g. because it is the default AMF) but the mobile terminal should now be re-allocated to the target AMF 1004.

In 1005, the re-allocation is triggered.

Optionally, the source AMF 1002 utilizes the NRF 1001 to discover the target AMF instance 1004 unless AMF information is available by other means, e.g. locally configured in the source AMF 1002.

For this, in 1006, the source AMF 1002 provides to the NRF:
- NF service Name(s), e.g. of the Service to be requested
- NF type of the target NF (target AMF 1004),
- NF type of the NF service consumer (source AMF 1002)
- T-AMF region, AMF Set ID (e.g. of T-AMF 1004), GUAMI (Globally Unique AMF ID) of T-AMF 1004.

In response, in 1007, the NRF 1001 provides
- a set of NF instances (i.e. possible target AMF instances), containing per NF Instance:
   - NF type,
   - NF instance ID,
   - FQDN (Fully Qualified Domain Name) or IP address(es) of the NF instance
   - and a list of services instances, where each service instance has:
      - a service name,
      - an NF service instance ID,
      - optionally Endpoint Address(es).

In 1008, the source AMF 1002 requests the service from the target AMF 1004 by means of a Namf_Communication_N1MessageNotify message which it sends to the SCP 1003. The message includes the source NF Service Set ID.

In 1009, the SCP 1003 performs the mapping of the source NF Service Set ID to the target NF Service Set ID of the T-AMF 1004.

In 1010, the SCP 1003 routes the service request to the T-AMF 1004 wherein it includes the target NF Service Set ID to which it has mapped the source NF Service Set ID.

The target AMF 1003 acknowledges the request in 1011.

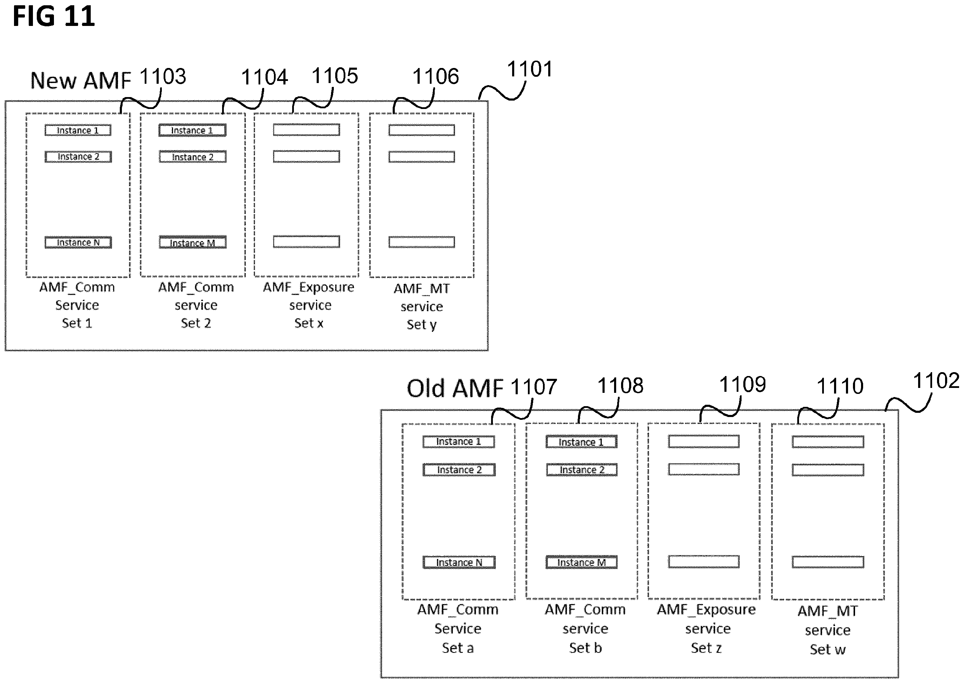

In the following, an example for an approach for determining a (suitable) target NF service set in a registration for mobility scenario is described (which includes AMF service set re-allocation). It is assumed that there is a new (or target) AMF and an old (or source or initial) AMF as illustrated in figure 11.

Figure 11 shows a first AMF (new AMF) 1101 and a second AMF (old AMF) 1102.

The first AMF 1101 includes four NF Service Sets 1103 to 1106, a first AMF_Comm Service Set (Set 1) 1103, a second AMF_Comm Service Set (Set 2) 1104, a first AM_Exposure Service Set (Set x) 1105 and a first AMF_MT Service Set (Set y) 1106.

The second AMF 1102 includes four NF Service Sets 1107 to 1110, a third AMF_Comm Service Set (Set a) 1107, a fourth AMF_Comm Service Set (Set b) 1108, a second AM_Exposure Service Set (Set z) 1109 and a second AMF_MT Service Set (Set w) 1110.

The first AMF 1101 for example corresponds to the second AMF 205 in figure 2 and the second AMF 1102 for example corresponds to the first AMF 203 in figure 2.

It is assumed that a mobile terminal (e.g. UE 201) performs a registration for mobility which is received by the new AMF 1101. It is further assumed that the new AMF 1101 and the old AMF 1102 do not share contexts, e.g. they are not in the same AMF set (network function set), and that the context of the mobile terminal is stored (or managed) by the fourth AMF_Comm Service Set (Set b) 1108.

Further, for the present example, regarding compatibility, it is assumed that
- The first AMF_Comm Service Set (Set 1) 1103 in new AMF 1101 is compatible with third AMF_Comm Service Set (Set a) 1107 in the old AMF 1102.
- The second AMF_Comm Service Set (Set 2) 1104 in the new AMF 1101 is compatible with the fourth AMF_Comm Service Set (Set b) 1108 in the old AMF 1102.

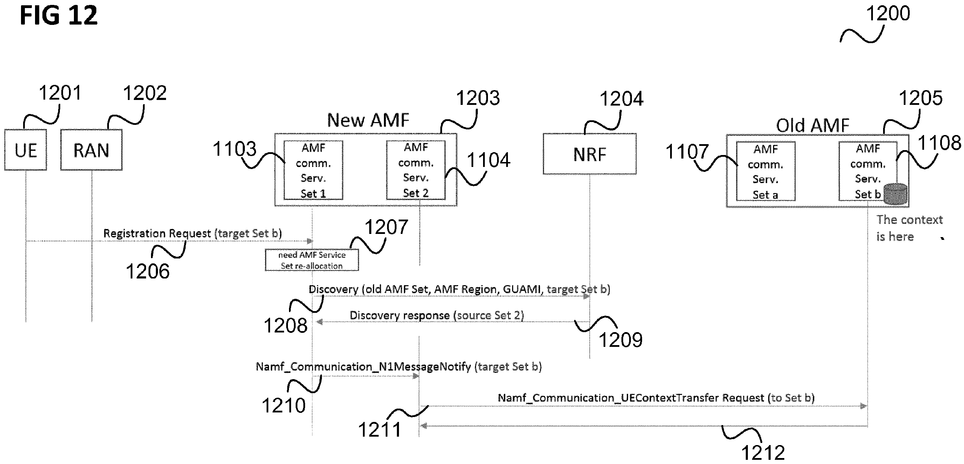

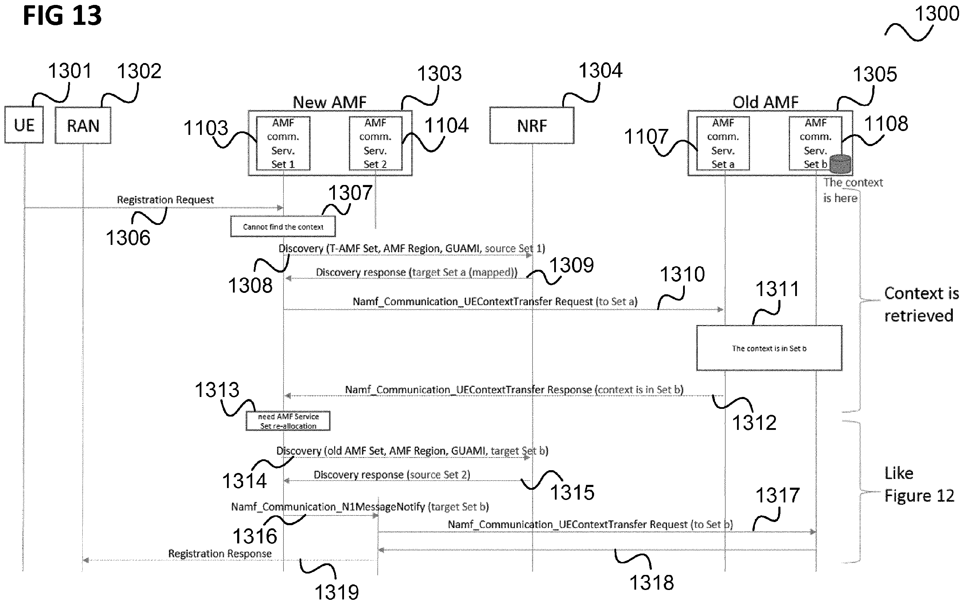

In the following, approaches for select the appropriate Service Set in the new AMF 1101 are described with reference to figures 12 and 13.

Figure 12 shows a flow diagram 1200 illustrating a Service Set selection in a registration for mobility scenario according to an embodiment.

A UE 1201, e.g. corresponding to UE 201, a RAN 1202, e.g. corresponding to the second RAN 204, a new AMF 1203 corresponding to new AMF 1101, an NRF 1202 and an old AMF 1203 corresponding to old AMF 1202 are involved in the flow.

In the approach of figure 12, the UE 1201 stores the NF Service Set ID of the service set storing its context (fourth AMF_Comm Service Set (Set b) 1108) and provides it with the registration request. This triggers a re-allocation to the appropriate NF Service Set of the new AMF 1203.

In 1204, the UE 1201 sends a registration request to the new AMF 1203. The registration request includes an identification of the fourth AMF_Comm Service Set (Set b) 1108.

In 1205, the registration request is assigned to the first AMF_Comm Service Set (Set 1) 1103 (e.g. by default). Thus, an AMF Service Set re-allocation is necessary. The new AMF 1203 becomes aware of that because the first AMF_Comm Service Set (Set 1) 1103 is not compatible with the fourth AMF_Comm Service Set (Set b) 1108 indicated by the UE 1201.

To find out to which AMF Service Set re-allocation is necessary, the new AMF 1203 sends a discovery request to the NRF 1202 in 1208, specifying in particular the fourth AMF_Comm Service Set (Set b) 1108.

The NRF 1202 checks the mapping of the fourth AMF_Comm Service Set (Set b) 1108, finds out that it maps to the second AMF_Comm Service Set (Set 2) 1104 and, in 1209, indicates the second AMF_Comm Service Set (Set 2) 1104 to the new AMF 1203.

It can be seen that the discovery process in this example is reverse to that of figures 5 to 10 because a Service Set of an old NF is determined based on a Service Set of a new NF while in figure 5 to 10 this is the other way round.

In 1210, the first AMF_Comm Service Set (Set 1) 1103 sends an Namf_Communication_N1MessageNotify specifying the fourth AMF_Comm Service Set (Set b) 1108 to the second AMF_Comm Service Set (Set 2) 1104. This is because the NRF 1202 has indicated the second AMF_Comm Service Set (Set 2) 1104 to the new AMF 1203 in 1209.

In 1211, the second AMF_Comm Service Set (Set 2) 1104 of the new AMF 1203 requests the UE's context by sending a Namf_Communication_UEContextTransfer Request message to the fourth AMF_Comm Service Set (Set b) 1108.

The fourth AMF_Comm Service Set (Set b) 1108 responds to the request in 1212.

Figure 13 shows a flow diagram 1300 illustrating a Service Set selection in a registration for mobility scenario according to an embodiment.

Similarly to figure 12, a UE 1301, e.g. corresponding to UE 201, a RAN 1302, e.g. corresponding to the second RAN 204, a new AMF 1303 corresponding to new AMF 1101, an NRF 1304 and an old AMF 1305 corresponding to old AMF 1302 are involved in the flow.

In the approach of figure 13, the new AMF 1303 becomes aware of the need for an AMF Service Set re-allocation by retrieving the UE context from the old AMF 1305, which includes the NF Service Set ID related to the old AMF 1305. Accordingly, in contrast to the approach of figure 12, it is not necessary that the UE 1301 knows which AMF service set holds its context.

In 1306, the UE 1301 sends a registration request to the new AMF 1303.

The registration request is assigned to the first AMF_Comm Service Set (Set 1) 1103 (e.g. by default).

In 1307, the new AMF 1303 determines that it cannot find the mobile terminal's context.

In 1308, the new AMF 1303 sends a discovery request to the NRF 1304 including an identification of the first AMF_Comm Service Set (Set 1) 1103 to find an AMF Service Set of the old 1305 to which the first AMF_Comm Service Set (Set 1) 1103 is mapped. This discovery can be seen to be similar as the discovery performed in the examples of figures 5 to 10.

The NRF 1304 checks the mapping of the first AMF_Comm Service Set (Set 1) 1103, finds out that it maps to the third AMF_Comm Service Set (Set a) 1107 and, in 1309, indicates the third AMF_Comm Service Set (Set a) 1107 to the new AMF 1303.

In 1310, the first AMF_Comm Service Set (Set 1) 1103 sends an Namf_Communication_UEContextTransfer Request to the third AMF_Comm Service Set (Set a) 1107 of the old AMF 1305.

This is because the NRF 1304 has indicated the third AMF_Comm Service Set (Set a) 1107 to the new AMF 1303 in 1309.

In 1311, the old AMF 1203 determines that the UE's context is in the fourth AMF_Comm Service Set (Set b) 1108 and, in 1312, indicates to the first AMF_Comm Service Set (Set 1) 1103 that the UE's context is in the fourth AMF_Comm Service Set (Set b) 1108.

In 1313, the new AMF 1303 is thus that a re-allocation is necessary.

To find out to which AMF Service Set re-allocation is necessary, the new AMF 1303 sends a discovery request to the NRF 1304 in 1314, specifying in particular the fourth AMF_Comm Service Set (Set b) 1108.

The NRF 1304 checks the mapping of the fourth AMF_Comm Service Set (Set b) 1108, finds out that it maps to the second AMF_Comm Service Set (Set 2) 1104 and, in 1315, indicates the second AMF_Comm Service Set (Set 2) 1104 to the new AMF 1303.

It can be seen that the discovery process of 1314 and 1315 is reverse to that of figures 5 to 10 because a Service Set of an old NF is determined based on a Service Set of a new NF whiles in figure 5 to 10 this is the other way round.

In 1316, the first AMF_Comm Service Set (Set 1) 1103 sends an Namf_Communication_N1MessageNotify specifying the fourth AMF_Comm Service Set (Set b) 1108 to the second AMF_Comm Service Set (Set 2) 1104. This is because the NRF 1304 has indicated the second AMF_Comm Service Set (Set 2) 1104 to the new AMF 1303 in 1315.

In 1317, the second AMF_Comm Service Set (Set 2) 1104 of the new AMF 1303 requests the UE's context by sending a Namf_Communication_UEContextTransfer Request message to the fourth AMF_Comm Service Set (Set b) 1108.

The fourth AMF_Comm Service Set (Set b) 1108 responds to the request in 1318 and the second AMF_Comm Service Set (Set 2) 1104 responds to the registration request by the UE 1301 in 1319.

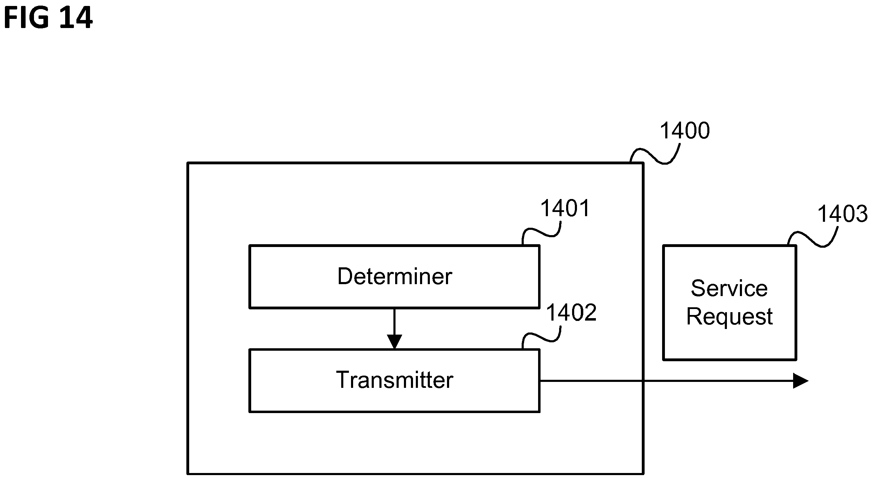

In summary, according to various embodiments, a mobile communication network component is provided as illustrated in figure 14.

Figure 14 shows a mobile communication network component 1400.

The mobile communication network component 1400 comprises a determiner 1401 configured to determine, for a first network function service set of a first network function, a second network function service set of a second network function to provide a service to a first network function service instance within the first network function service set.

The mobile communication network component 1400 further comprises a transmitter 1402 configured to transmit a service request 1403 to the determined second network function service set.

In other words, according to various embodiments, a component of a mobile communication network determines which network function service set of a service producer should provide a service to a service consumer (which may be the mobile communication network component itself or another component). For the determination, the mobile communication network component may for example take compatibility requirements of the service consumer into account, i.e. the determiner may perform the determination based on a compatibility criterion which may include compatibility characteristics of the service consumer (first network function service set of the first network function) and the service producer(second network function service set of the second network function).

According to various embodiments, in other words, an approach is provided to perform selection of a NF service producer (specifically an NF service set of an NF) which is compatible with the NF service consumer (specifically a NF service set of another NF). The selection can be seen as a discovery step that maps the flavours (i.e. for example implementation characteristics or compatibility characteristics) of the service consumer (requesting NF service set) and service producer (providing NF service set).

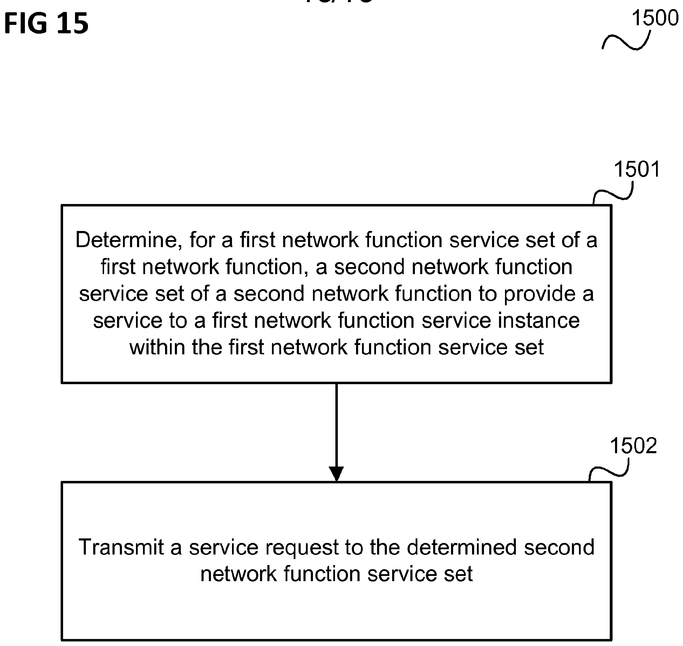

It should be noted that while in the embodiments described above with reference to figures 7 to 13 the consumer and producers are both of same type (i.e. AMF), the approach of figure 14 (and figure 15) may refer generically to services of different types. For example, an AMF service invokes a SMF PDU session service and it needs a flavour of the PDU session service compatible with the flavour of the requester.

Transmitting the service request to the determined second network function service set may mean that the service request is transmitted to the second network function and includes a specification of the determined second network function service set as producer for the service. Further, a request to a network function service set may be understood as a request to one of the service instances within the network function service set. The requested network function service set (or service instance) may provide the service in response to the request.

The mobile communication network component 1400 for example carries out a method as illustrated in figure 15.

Figure 15 shows a flow diagram 1500 illustrating a method for requesting a service.

In 1501, for a first network function service set of a first network function, a second network function service set of a second network function to provide a service to a first network function service instance within the first network function service set is determined.

In 1502, a service request is transmitted to the determined second network function service set.

According to one embodiment, NF instances host NF Services and within each NF instance, NF services with the same flavour are identified by the same NF Service set ID.

A transaction between NF Service instance of type 1 with NF Service set ID 1 within NF instance 1 (requester) and an NF Service instance, within a second NF instance, of type a and NF Service set ID compatible with NF Service set ID 1 (producer) is to be performed.

For this, according to an embodiment, the following are performed:
1. A discovery: to determine, within each suitable second NF instance, the NF service set ID compatible with the service flavour identified by NF service set ID 1 within NF instance 1
2. A message routing: the service request from NF Service instance 1 is routed to one of the NF service instances, within a selected second NF instance, with the mapped NF service set ID determined in the discovery.

The discovery of 1 may be performed by the consumer with an NRF (direct communication). Alternatively, a service mesh (SCP) may perform the discovery of 1 (indirect communication) .

The mobile communication network component and its parts (e.g. the determiner and the transmitter) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of the aspects of this disclosure as defined by the appended claims.

## Claims

1. A mobile communication network component (1400) comprising:
a determiner (1401) configured to determine, for a first network function service set of a first network function, a second network function service set of a second network function to provide a service to a first network function service instance within the first network function service set, wherein the determiner (1401) is configured to determine the second network function service set based on a mapping of the first network function service set to the second network function service set;
and a transmitter (1402) configured to transmit a service request (1403) to the determined second network function service set.

2. The mobile communication network component (1400) of claim 1, wherein the determiner (1401) is configured to determine the second network function service set based on a compatibility with the first network function service set.

3. The mobile communication network component (1400) of claim 1 or 2, wherein the determiner (1401) is configured to determine the second network function service set by consulting a database storing a mapping of the first network function service set to the second network function service set.

4. The mobile communication network component (1400) of claims 3, wherein the database is a network repository function.

5. The mobile communication network component (1400) of any one of claims 1 to 4, wherein the mobile communication network component is the first network function.

6. The mobile communication network component (1400) of any one of claims 1 to 4, wherein the mobile communication network component comprises a receiver configured to receive the service request (1403) from the first network function to be routed to the second network function.

7. The mobile communication network component (1400) of claim 6, wherein the mobile communication network component is a signalling communication proxy.

8. The mobile communication network component (1400) of any one of claims 1 to 7, wherein transmitting a service request (1403) to the determined second network function service set includes selecting a second network function service instance from the determined second network function service set and transmitting the service request (1403) to the second network function service instance.

9. The mobile communication network component (1400) of any one of claims 1 to 8, wherein the first network function comprises a first plurality of network function service sets and the second network function comprises a second plurality of network function service sets.

10. The mobile communication network component (1400) of claim 9, wherein the determiner (1401) is configured to determine the second network function service set by selecting a network function service set from the second plurality of network function service sets.

11. The mobile communication network component (1400) of any one of claims 1 to 10, wherein the first network function is a source Access and Mobility Management Function and the second network function is a target Access and Mobility Management Function in a handover or a registration for mobility of a mobile terminal.

12. The mobile communication network component (1400) of any one of claims 1 to 9, wherein the first network function is a target Access and Mobility Management Function and the second network function is a source Access and Mobility Management Function in a registration for mobility of a mobile terminal.

13. The mobile communication network component (1400) of claim 12, wherein the service is a transfer of a context of a mobile terminal.

14. A Method, performed by a mobile communication network component (1400), for requesting a service comprising: determining, for a first network function service set of a first network function, a second network function service set of a second network function to provide the service to a first network function service instance within the first network function service set, wherein the second network function service set is determined based on a mapping of the first network function service set to the second network function service set; and
transmitting a service request (1403) to the determined second network function service set.

## Patentansprüche

1. Eine Mobilkommunikationsnetzwerk-Komponente (1400), aufweisend:
eine Ermittlungsvorrichtung (1401), die eingerichtet ist, für einen ersten Netzwerkfunktionsdienstsatz einer ersten Netzwerkfunktion einen zweiten Netzwerkfunktionsdienstsatz einer zweiten Netzwerkfunktion zu ermitteln, um einen Dienst zu einer ersten Netzwerkfunktionsdienstinstanz innerhalb des ersten Netzwerkfunktionsdienstsatzes bereitzustellen, wobei die Ermittlungsvorrichtung (1401) eingerichtet ist, den zweiten Netzwerkfunktionsdienstsatz basierend auf einer Abbildung des ersten Netzwerkfunktionsdienstsatzes auf den zweiten Netzwerkfunktionsdienstsatz zu ermitteln; und
eine Übermittlungsvorrichtung (1402), die eingerichtet ist, eine Dienst-Anforderung (1403) zu dem ermittelten zweiten Netzwerkfunktionsdienstsatz zu übermitteln.

2. Die Mobilkommunikationsnetzwerk-Komponente (1400) gemäß Anspruch 1, wobei die Ermittlungsvorrichtung (1401) eingerichtet ist, den zweiten Netzwerkfunktionsdienstsatz basierend auf einer Kompatibilität mit dem ersten Netzwerkfunktionsdienstsatz zu ermitteln.

3. Die Mobilkommunikationsnetzwerk-Komponente (1400) gemäß Anspruch 1 oder 2, wobei die Ermittlungsvorrichtung (1401) eingerichtet ist, den zweiten Netzwerkfunktionsdienstsatz mittels Berücksichtigens einer Datenbank, die eine Abbildung des ersten Netzwerkfunktionsdienstsatzes auf den zweiten Netzwerkfunktionsdienstsatz speichert, zu ermitteln.

4. Die Mobilkommunikationsnetzwerk-Komponente (1400) gemäß Anspruch 3, wobei die Datenbank eine Netzwerk-Repository-Funktion ist.

5. Die Mobilkommunikationsnetzwerk-Komponente (1400) gemäß einem der Ansprüche 1 bis 4, wobei die Mobilkommunikationsnetzwerk-Komponente die erste Netzwerkfunktion ist.

6. Die Mobilkommunikationsnetzwerk-Komponente (1400) gemäß einem der Ansprüche 1 bis 4, wobei die Mobilkommunikationsnetzwerk-Komponente eine Empfangsvorrichtung aufweist, die eingerichtet ist, die Dienst-Anforderung (1403) von der ersten Netzwerkfunktion zu empfangen, um diese zu der zweiten Netzwerkfunktion weiterzuleiten.

7. Die Mobilkommunikationsnetzwerk-Komponente (1400) gemäß Anspruch 6, wobei die Mobilkommunikationsnetzwerk-Komponente ein Signalisierungs-Kommunikations-Proxy ist.

8. Die Mobilkommunikationsnetzwerk-Komponente (1400) gemäß einem der Ansprüche 1 bis 7, wobei ein Übermitteln einer Dienst-Anforderung (1403) zur dem ermittelten zweiten Netzwerkfunktionsdienstsatz ein Auswählen einer zweiten Netzwerkfunktionsdienstinstanz von dem ermittelten zweiten Netzwerkfunktionsdienstsatz und ein Übermitteln der Dienst-Anforderung (1403) zu der zweiten Netzwerkfunktionsdienstinstanz aufweist.

9. Die Mobilkommunikationsnetzwerk-Komponente (1400) gemäß einem der Ansprüche 1 bis 8, wobei die erste Netzwerkfunktion eine erste Vielzahl von Netzwerkfunktionsdienstsätzen aufweist und wobei die zweite Netzwerkfunktion eine zweite Vielzahl von Netzwerkfunktionsdienstsätzen aufweist.

10. Die Mobilkommunikationsnetzwerk-Komponente (1400) gemäß Anspruch 9, wobei die Ermittlungsvorrichtung (1401) eingerichtet ist, den zweiten Netzwerkfunktionsdienstsatz mittels Auswählens eines Netzwerkfunktionsdienstsatzes aus der zweiten Vielzahl von Netzwerkfunktionsdienstsätzen zu ermitteln.

11. Die Mobilkommunikationsnetzwerk-Komponente (1400) gemäß einem der Ansprüche 1 bis 10, wobei die erste Netzwerkfunktion eine Ausgangs-Zugangs-und-Mobilität-Management-Funktion und die zweite Netzwerkfunktion eine Ziel-Zugangs-und-Mobilität-Management-Funktion bei einem Handover oder einer Registrierung für eine Mobilität eines mobilen Endgeräts ist.

12. Die Mobilkommunikationsnetzwerk-Komponente (1400) gemäß einem der Ansprüche 1 bis 9, wobei die erste Netzwerkfunktion eine Ziel-Zugangs-und-Mobilität-Management-Funktion und die zweite Netzwerkfunktion eine Ausgangs-Zugangs-und-Mobilität-Management-Funktion bei einer Registrierung für eine Mobilität eines mobilen Endgeräts ist.

13. Die Mobilkommunikationsnetzwerk-Komponente (1400) gemäß Anspruch 12, wobei der Dienst eine Übertragung eines Kontexts eines mobilen Endgeräts ist.

14. Ein Verfahren zum Anfordern eines Dienstes, das von einer Mobilkommunikationsnetzwerk-Komponente (1400) durchgeführt wird, das Verfahren aufweisend:
Ermitteln eines zweiten Netzwerkfunktionsdienstsatzes einer zweiten Netzwerkfunktion für einen ersten Netzwerkfunktionsdienstsatz einer ersten Netzwerkfunktion, um den Dienst zu einer ersten Netzwerkfunktionsdienstinstanz innerhalb des ersten Netzwerkfunktionsdienstsatzes bereitzustellen, wobei der zweite Netzwerkfunktionsdienstsatz basierend auf einer Abbildung des ersten Netzwerkfunktionsdienstsatzes auf den zweiten Netzwerkfunktionsdienstsatz ermittelt wird; und
Übermitteln einer Dienst-Anforderung (1403) zu dem ermittelten zweiten Netzwerkfunktionsdienstsatz.

## Revendications

1. Composant de réseau de communication mobile (1400) comprenant :
un déterminateur (1401) configuré pour déterminer, pour un ensemble de services de première fonction de réseau d'une première fonction de réseau, un ensemble de services de seconde fonction de réseau d'une seconde fonction de réseau pour fournir un service à une instance de services de première fonction de réseau à l'intérieur de l'ensemble de services de première fonction de réseau, dans lequel le déterminateur (1401) est configuré pour déterminer l'ensemble de services de seconde fonction de réseau sur la base d'un mappage de l'ensemble de services de première fonction de réseau vers l'ensemble de services de seconde fonction de réseau ; et
un émetteur (1402) configuré pour émettre une demande de service (1403) vers l'ensemble de services de seconde fonction de réseau déterminé.

2. Composant de réseau de communication mobile (1400) selon la revendication 1, dans lequel le déterminateur (1401) est configuré pour déterminer l'ensemble de services de seconde fonction de réseau sur la base d'une compatibilité avec l'ensemble de services de première fonction de réseau.

3. Composant de réseau de communication mobile (1400) selon la revendication 1 ou 2, dans lequel le déterminateur (1401) est configuré pour déterminer l'ensemble de services de seconde fonction de réseau en consultant une base de données stockant un mappage de l'ensemble de services de première fonction de réseau vers l'ensemble de services de seconde fonction de réseau.

4. Composant de réseau de communication mobile (1400) selon la revendication 3, dans lequel la base de données est une fonction de dépositaire de réseau.

5. Composant de réseau de communication mobile (1400) selon l'une quelconque des revendications 1 à 4, dans lequel le composant de réseau de communication mobile est la première fonction de réseau.

6. Composant de réseau de communication mobile (1400) selon l'une quelconque des revendications 1 à 4, dans lequel le composant de réseau de communication mobile comprend un récepteur configuré pour recevoir la demande de service (1403) depuis la première fonction de réseau à router vers la seconde fonction de réseau.

7. Composant de réseau de communication mobile (1400) selon la revendication 6, dans lequel le composant de réseau de communication mobile est un mandataire de communication de signalisation.

8. Composant de réseau de communication mobile (1400) selon l'une quelconque des revendications 1 à 7, dans lequel la transmission d'une demande de service (1403) vers l'ensemble de services de seconde fonction de réseau déterminé inclut la sélection d'une instance de services de seconde fonction de réseau dans l'ensemble de services de seconde fonction de réseau déterminé et la transmission de la demande de service (1403) vers l'instance de services de seconde fonction de réseau.

9. Composant de réseau de communication mobile (1400) selon l'une quelconque des revendications 1 à 8, dans lequel la première fonction de réseau comprend une première pluralité d'ensembles de services de fonction de réseau et la seconde fonction de réseau comprend une seconde pluralité d'ensembles de services de fonction de réseau.

10. Composant de réseau de communication mobile (1400) selon la revendication 9, dans lequel le déterminateur (1401) est configuré pour déterminer l'ensemble de services de seconde fonction de réseau en sélectionnant un ensemble de services de fonction de réseau dans la seconde pluralité d'ensembles de services de fonction de réseau.

11. Composant de réseau de communication mobile (1400) selon l'une quelconque des revendications 1 à 10, dans lequel la première fonction de réseau est une Fonction de Gestion d'Accès et de Mobilité source et la seconde fonction de réseau est une Fonction de Gestion d'Accès et de Mobilité cible dans une passation ou un enregistrement pour une mobilité d'un terminal mobile.

12. Composant de réseau de communication mobile (1400) selon l'une quelconque des revendications 1 à 9, dans lequel la première fonction de réseau est une Fonction de Gestion d'Accès et de Mobilité cible et la seconde fonction de réseau est une Fonction de Gestion d'Accès et de Mobilité source dans un enregistrement pour une mobilité d'un terminal mobile.

13. Composant de réseau de communication mobile (1400) selon la revendication 12, dans lequel le service est un transfert d'un contexte d'un terminal mobile.

14. Procédé, réalisé par un composant de réseau de communication mobile (1400), destiné à demander un service comprenant :
la détermination, pour un ensemble de services de première fonction de réseau d'une première fonction de réseau, un ensemble de services de seconde fonction de réseau d'une seconde fonction de réseau pour fournir le service à une instance de services de première fonction de réseau à l'intérieur de l'ensemble de services de première fonction de réseau, dans lequel l'ensemble de services de seconde fonction de réseau est déterminé sur la base d'un mappage de l'ensemble de services de première fonction de réseau vers l'ensemble de services de seconde fonction de réseau ; et
l'émission d'une demande de service (1403) vers l'ensemble de services de seconde fonction de réseau déterminé.
